# EUROPEAN PATENT APPLICATION

(11) **EP 4 763 802 A1**
(43) Date of publication of application: **24.06.2026**
(21) Application number: 24222477.2
(22) Date of filing: 20.12.2024
(51) Int. Cl.: C01B 21/26, C01B 21/28, C01B 21/38, B01J 8/00, B01J 19/00

(54) **BURNER BASKET ASSEMBLY OF AN AMMONIA OXIDATION REACTOR**

(71) Applicant: Yara International ASA, 0277 Oslo (NO)
(72) Inventor: de Smet, Andre, 0277 Oslo (NL); Serraiocco, Luigi, 0277 Oslo (NO); De Backer, Antoine, 0277 Oslo (NO); Øystein, Nirisen, 0277 Oslo (NO); Delhaye, Marcel, 0277 Oslo (BE); Deon, Riccardo, 0277 Oslo (NO)
(74) Representative: De Clercq & Partners

(57) **Abstract**

A burner basket assembly of an ammonia oxidation reactor, wherein the burner basket assembly comprises a burner basket inner side wall, a gas-permeable bottom plate, wherein between the burner basket inner side wall and the bottom plate a circumferential radial clearance is present, an L-shaped clearance cover profile which comprises a horizontal and a vertical clearance cover plate, wherein the horizontal and the vertical clearance cover plate are mechanically fixed to each other, wherein the vertical clearance cover plate comprises a window opening, and wherein the L-shaped cover profile during operation is displaceable in a vertical direction in view of the burner basket inner side wall, and at least one key-lock system which comprises a lock which is connected to the burner basket inner side wall, which extends through the window opening in the vertical clearance cover plate, and which comprises at least one lock opening, and a key which has at least a vertical pin with a certain pin length, wherein the lock opening is configured to allow insertion of the pin in the lock opening, and at the same time is configured to limit movement of the pin in view of the lock opening to such an extent that radial movement of the vertical clearance plate in view of the burner basket inner side wall is restricted.

## Description

### Technical field

The present disclosure relates to a burner basket assembly of an ammonia oxidation reactor, more in particular in a nitric acid production plant.

### Background

In a nitric acid production process, one of the steps is the catalytic conversion of ammonia (NH₃) and oxygen (O₂) to nitric oxide (NO) and water (H₂O) in an ammonia oxidation reactor (also called an ammonia burner or ammonia oxidizer). In the ammonia oxidation reactor, a burner basket assembly is arranged which is fixed to the side wall of the ammonia oxidation reactor. The main purpose of the burner basket assembly is to be a stable platform for the catalytic, non-catalytic and inert packing material and for the gauze pack which is resting on this packing material, and to avoid gas bypass.

In general, with "catalytic material" is meant material that is used to abate gaseous by-products such as amongst others N₂O, and/or to obtain the desired production gases such as oxidation of NH₃, and/or for recovery of precious metals or collecting PGM (platinum group metals). The secondary N₂O abatement catalyst material is catalytic material used to reduce N₂O-emissions after the oxidation of ammonia, which is a crucial step to meet environmental regulations by reducing the levels of N₂O before it is released into the atmosphere. "Non-catalytic packing material" can influence the reaction but do not act as catalysts. They may enhance mixing or heat transfer. "Inert packing material" does not participate in the chemical reactions occurring in the burner. Inert packing material serves as filling material mainly used to support the catalyst gauzes and to distribute the gas. They are typically made from materials like ceramic or glass and include, but not limited to, Raschig rings and balls, Pall rings, Berl saddles, ceramic saddles and sponge, etc.

The burner basket assembly also contributes to a uniform gas flow to the equipment downstream of the ammonia oxidation reactor. The gauzes in the gauze pack in the ammonia oxidation reactor are usually made out of platinum group metals.

The burner basket assembly comprises a burner basket side wall, comprising a burner basket outer side wall and a burner basket inner side wall. The burner basket inner side wall typically surrounds from top till bottom the following components which are part of the burner basket assembly:
- multiple gauzes, also called the gauze pack, which, along its outer rim, is supported by a gauze shelf. The gauze pack is maintained in its proper position by counterweights, a clamping system or a solid ring,
- a gauze shelf which supports the gauze pack,
- a bed of catalytic, non-catalytic and/or inert packing material,
- a gas-permeable, apertured bottom plate which allows process gas (NOₓ-containing gas) to flow through it,
- a honeycomb plate which supports the bottom plate, which can be a perforated plate or possibly a screen or a mesh,
- a honeycomb shelf which supports the honeycomb, and
- a supporting structure which further supports the honeycomb and which is completely free from the honeycomb shelf in the vertical direction.

In some ammonia oxidation reactors, no honeycomb plate is present. In that case, the perforated bottom plate is divided in different bottom plate segments which each are provided with beams to place the different bottom plate segments on a downstream supporting structure.

In a burner basket assembly as described above, ammonia converts to NO (nitric oxide) typically at a temperature of between 800°C and 950°C or sometimes even higher, and a pressure typically ranging between 1 and 15 bar abs., the specific temperature and pressure varying based on the design and the operating conditions of the ammonia oxidation reactor. During the heating of the burner basket from ambient temperature to the operation temperature, there is a considerable expansion of the different parts of the burner basket assembly due to thermal influences. Inversely, after plant stop, a reduction of the temperature leads to contraction. Under steady state conditions, big temperature differences - that may even be greater than 500°C - between the (hot) catalyst support structures and the (cold) burner basket side walls, which are made out of high temperature alloyed steel, result in differences in thermal expansion and contraction of the burner basket parts. These differences may be more significant during transient conditions, due to different heating and cooling rates respectively during start-up and shut down of the (nitric acid) production plant.

In order to reduce mechanical stresses in the material of the burner basket assembly parts, the bottom plate and the burner basket inner side wall are typically formed as separate parts, and a circumferential radially extending clearance (or a gap) is provided between these two parts. The disadvantage of this clearance is that it creates the risk of packing material falling through the clearance, thereby resulting in a thinner layer of packing material at that place. In case the packing material comprises N₂O abatement catalytic material, then the yield of the N₂O abatement can be decreased when such N₂O abatement catalytic material falls down through the circumferential radial clearance.

The thermal influences also often result in the packing material moving away from the burner basket inner side wall during operation of the burner basket assembly, thereby resulting in the creation of a ditch (or trough) at the periphery of the burner basket inner side wall, which often causes one or more gauzes of the gauze pack to tear because they are not supported and are subjected to the load of the gas flowing through it. Torn catalyst gauzes result in not all NH₃ being converted (burned) in the catalyst gauze layer because the NH₃ goes straight through. It is commonly observed that the ditch gets deeper with an increasing number of starts and stops of the nitric acid production plant. This tearing represents a problem due to loss of combustion efficiency and further forms a possibly hazardous problem. Ammonia may slip through the ditch and can form ammonium nitrate and ammonium nitrite in the downstream equipment, especially in the acid condenser, which may decompose violently.

In order to solve these issues, a clearance cover arrangement can be installed inside the burner basket inner side wall which comprises at least a horizontal and a vertical clearance cover plate which are connected to each other and form together an L-shaped clearance cover profile which covers the clearance between the bottom plate and the burner basket inner side wall. In an ideal situation, the vertical clearance cover plate of the L-shaped clearance cover profile is in contact with the burner basket inner side wall. It is emphasized that the L-shaped clearance cover profile is however not mechanically fixed to the burner basket inner side wall; In the light of the present disclosure, the expression "which is not mechanically fixed to it" means that a displacement / movement still is possible along the curvature of the burner basket wall and up and down in view of the burner basket wall, but not radially towards and away from the center of the burner basket assembly. In other words, due to the thermal influences, the burner basket inner side wall can move up and down, which movement will be followed by the clearance cover arrangement, in this way maintaining the covering of the clearance and thus restricting or even eliminating undesired access of the packing material supported by the bottom plate to this clearance.

The clearance cover arrangement can be in the form of the L-shaped clearance cover profile, but can also be part of a wave breaker arrangement. In the latter case, the vertical clearance cover plate is at least a part of the back wall and the horizontal clearance cover plate is at least part of the bottom wall of the wave breaker arrangement. An example of wave breaker arrangement is described in WO 2004/005187.

The problem with the abovementioned clearance cover arrangements is that they are still able to move away from the burner basket inner wall over such a distance that at least part of the circumferential clearance between the burner basket inner side wall and the bottom plate is not covered anymore. This increases the risk that, on the one hand, process gas can bypass the catalytic, non-catalytic and/or inert packing material, which can have several negative consequences such as reduced conversion efficiency since less N₂O is abated, and on the other hand, packing material can fall down into the circumferential radial clearance.

It is consequently a goal of the present disclosure to provide a burner basket assembly for an ammonia oxidation reactor for a nitric acid production plant which keeps the vertical clearance cover plate of the clearance cover arrangement as close as possible to the burner basket inner side wall, therewith being sufficiently able to avoid clashing of parts of the burner basket assembly when being subjected to thermal influences.

### Summary

According to a first aspect of the present disclosure, a burner basket assembly of an ammonia oxidation reactor is disclosed, wherein the burner basket assembly comprises a burner basket inner side wall, a gas-permeable bottom plate, wherein between the burner basket inner side wall and the bottom plate a circumferential radial clearance is present, an L-shaped clearance cover profile which comprises a horizontal and a vertical clearance cover plate, wherein the horizontal and the vertical clearance cover plate are mechanically fixed to each other, wherein the vertical clearance cover plate comprises a window opening, and wherein the L-shaped cover profile during operation is displaceable in a vertical direction in view of the burner basket inner side wall, and at least one key-lock system which comprises a lock which is connected to the burner basket inner side wall, which extends through the window opening in the vertical clearance cover plate, and which comprises at least one lock opening, and a key which has at least a vertical pin with a certain pin length, wherein the lock opening is configured to allow insertion of the pin in the lock opening, and at the same time is configured to limit movement of the pin in view of the lock opening to such an extent that radial movement of the vertical clearance plate in view of the burner basket inner side wall is restricted.

By providing such a key-lock system, a solid and reliable solution is found to "lock" the L-shaped clearance cover profile sufficiently to the burner basket inner side wall without mechanically fixation, but still allowing vertical displacement of the L-shaped cover clearance profile in view of the burner basket inner side wall in order to follow an up and down movement of the bottom plate of the burner basket arrangement on which the L-shaped clearance cover profile rests.

In a possible embodiment of a burner basket assembly according to the present disclosure, the pin has a rectangular or square cross-section over its entire pin length. The advantage of a pin with a rectangular or square cross-section provides a stable fit with the lock. Furthermore, in view of for instance a circular cross-section, the likelihood of rotation or slippage is reduced. In this way, the pin is maintained in its fixed position within the lock. Furthermore, square or rectangular shaped pins can distribute a substantial load across their surfaces, which enhances the overall strength and durability of the lock mechanism, this since the flat sides of a square or rectangular shaped pin are able to resist deformation under load.

In a specific embodiment of a burner basket assembly according to the present disclosure, the lock comprises a plurality of staggered lock openings in view of the burner basket inner side wall.

More in particular, a plurality of neighbouring staggered overlapping lock openings are provided, wherein each lock opening is configured to remove the pin which was inserted in it out of it. In the light of the present disclosure, with the term "staggered" is meant that the different openings are shifted in view of each other with relation to the burner basket inner side wall or in other words, are positioned at different radial distance from the burner basket inner side wall. This has the advantage that, depending on the degree of deformation and/or contraction / expansion of the burner basket inner side wall and the L-shaped clearance cover profile, the pin can be inserted in another lock opening.

In a particular embodiment of a burner basket assembly according to the present disclosure, the vertical cover clearance plate comprises at least two retaining plates which are mechanically fixed to the vertical cover clearance plate and which are configured to hold at least one sealing plate in a fixed position in view of the vertical clearance cover plate, wherein the at least one sealing plate is provided with a pass-through opening which is arranged to let the lock pass through it and in a fixed position extend through it, wherein more in particular two cover plates are provided which are located at opposite sides of one sealing plate to hold the sealing plate in the fixed position. The sealing plate, which in itself has a pass-through opening through which in a mounted situation the lock extends, is necessary to cover the window opening in the vertical sealing cover plate around the pass-through opening. This configuration prevents bypass of process gas by the window opening arranged in the vertical clearance cover plate and prevents that the L-shaped clearance cover profile could move radially and/or tangentially. In the light of the present disclosure, with the term "radially" is meant towards or away from the centre of the bottom plate of the burner basket assembly in view of the burner basket inner side wall. With the term "tangentially" is meant along the edge of circular shaped the burner basket inner side wall, or in other words following the curvature of the circular burner basket inner side wall.

More in particular, between the sealing plate and each of the two or more retaining plates, a clearance is provided. This allows movement of these parts in view of each other in case the parts would exert forces on each other that would result in deformation and/or breaking thereof.

In an optional embodiment of a burner basket assembly according to the present disclosure, the burner basket assembly a L-shaped clearance cover profile which comprises a horizontal clearance cover plate and a vertical clearance cover plate which has a certain length, wherein the horizontal and the vertical clearance cover plate are mechanically fixed to each other, and wherein the L-shaped cover profile during operation is displaceable in a vertical direction in view of the burner basket inner side wall, a support ring which is mechanically fixed to the burner basket inner side wall, and an upside-down positioned L-shaped locking profile, comprising a horizontal locking plate and a vertical locking plate which are mechanically fixed to each other, wherein the horizontal locking plate is mechanically fixed to the support ring, wherein the L-shaped locking profile, the support ring and the respective part of the burner basket inner side wall limit a ring-shaped gap into which at least a top part of the vertical clearance cover plate is located, and wherein between the support ring and the vertical clearance cover plate a distance is arranged which is such that the vertical displacement of the vertical clearance cover plate in view of the burner basket inner side wall is limited by the support ring and at all times during the operation of the burner basket, collision between the L-shaped clearance cover profile and the L-shaped locking profile is avoided. This L-shaped locking profile as described above helps the 'locking' of the vertical clearance cover plate, and consequently the whole L-shaped clearance cover profile or the wave breaker arrangement where the vertical clearance cover plate is part of, whichever is applicable, to the burner basket inner side wall, or in other words prevents radial movement of the L-shaped clearance cover profile or the wave breaker arrangement in view of the burner basket inner side wall. On the other hand, it forms a labyrinth seal which reduces gas bypass.

In an optional embodiment of a burner basket assembly according to the present disclosure, the L-shaped clearance cover profile is part of a wave breaker arrangement, wherein the wave breaker arrangement comprises a vertical back wall and a horizontal bottom, and wherein the vertical clearance cover plate is at least part of the vertical back wall and the horizontal clearance cover plate is at least part of the horizontal bottom of the wave break arrangement.

In an optional embodiment of a burner basket assembly according to the present disclosure, the L-shaped clearance cover profile comprises a multitude of L-shaped clearance cover profile segments, each comprising a vertical clearance cover plate segment, and a horizontal clearance cover plate segment, wherein each vertical clearance cover plate segment is mechanically fixed to a respective horizontal clearance cover plate segment, and/or the support ring comprises a multitude of support ring segments which each are mechanically fixed to the burner basket inner side wall, wherein each of the support ring segments comprise a support ring segment bottom, and/or the L-shaped locking profile comprises a multitude of L-shaped locking profile segments, each comprising a horizontal L-shaped locking plate segment and a vertical L-shaped locking plate segment which are mechanically fixed to each other, wherein each L-shaped locking profile segment, a respective support ring segment and the burner basket inner side wall limit a ring-shaped gap segment into which a top part of the respective vertical clearance cover plate segment is located, and wherein each support ring segment is placed at a distance in view of the respective vertical clearance cover plate segment which is such that the vertical displacement of the vertical clearance cover plate segment in view of the burner basket inner side wall is limited by the respective support ring segment, and at all times during the operation of the ammonia oxidation reactor, collision between the top part of the vertical clearance cover plate segment and the L-shaped locking profile segment and/or the support ring segment is avoided. The advantage of providing a support ring is that the L-shaped profile is easier to install and remove again from the burner basket inner side wall. During installation, it is a level reference guaranteeing that a small clearance is kept between the upside-down L-locking profile and the vertical clearance cover plate. When removal is necessary, the support ring takes care that the burner basket inner side wall is not damaged.

In a particular embodiment of a burner basket assembly according to the present disclosure, the support ring and each of the support ring segments have a constant cross-section over their circumference, the support ring and each of the support ring segments more in particular having a square or rectangular cross-section.

In a more particular embodiment of a burner basket assembly according to any the present disclosure, the support ring and each of the support ring segments have a square or rectangular cross-section. By configuring the support ring with straight surfaces, the L-shaped locking profile (segments) can easily be attached to the support ring (segments).

More in particular, the wave breaker arrangement comprises a multitude of wave breaker segments, wherein each wave breaker segment comprises a vertical back wall segment and a horizontal bottom segment, wherein each vertical clearance cover segment is at least part of a respective vertical back wall segment and each horizontal clearance cover plate segment is at least part of a respective horizontal bottom segment of the respective wave breaker segment.

In a specific embodiment of a burner basket assembly according to the present disclosure, the mechanical fixing is done by welding.

According to a further aspect of the present disclosure, an ammonia oxidation reactor comprising a burner basket assembly according to the present disclosure as described above is disclosed.

According to another further aspect of the present disclosure, a nitric acid production plant comprising an ammonia oxidation reactor according to the present disclosure as described above is disclosed.

### Description of the figures

FIG. 1 shows a perspective front view of a part of a first embodiment ofa burner basket assembly according to the present disclosure comprising an L-shaped clearance cover plate and an embodiment of a key-lock system according to the present disclosure;
FIG. 2a shows a front view the embodiment of the key-lock system as shown in Figure 1;
FIG. 2b shows a top view of the embodiment of the key-lock system as shown in Figure 1 and 2a;
FIG. 3 show a cross-section of a second embodiment of a burner basket assembly with a wave breaker segment which is locked to the burner basket inner side wall without being mechanically fixed to it to restrict radial movement of the wave breaker segmentin view of the burner basket inner side wall by means of a L-shaped locking profile segment, and the embodiment of the key-lock system as shown in Figures 2a and 2b;
FIG. 4 shows a perspective side view of the second embodiment of the burner basket arrangement as shown in FIG. 3 but where the L-shaped locking profile is installed in a mirrored way in view of FIG. 3 which can be necessary after the burner basket assembly was in process and the metal parts thereof have been subjected to thermal influences.

### Detailed description

The present invention will now be described in more detail by means of the following detailed description of a burner basket assembly according to the present disclosure. The sole aim of this description is to give illustrative examples and to indicate further advantages and features of these burner basket assemblies and can therefore by no means be interpreted as a limitation of the area of application of the present disclosure or of patent rights defined in the claims.

A burner basket assembly of an ammonia oxidation reactor according to the present disclosure, more in particular of a nitric acid, caprolactam, hydrogen cyanide synthesis or fertilizer production plant, comprises a burner basket side wall which in its turn comprises a burner basket outer side wall and a burner basket inner side wall. The burner basket outer side wall and the burner basket inner side wall are more specifically vertically oriented and have a cylindrical (curved) shape. The burner basket inner side wall surrounds, when installed, a gas-permeable bottom plate which is configured to support catalytic, non-catalytic and/or inert packing material. This bottom plate has a circular diameter and is typically perforated. To meet the needs of the burner basket inner side wall and the bottom plate to deform and/or to expand due to the thermal differences between start-up and operation of the ammonia oxidation reactor or even during operation thereof, the burner basket inner side wall and the bottom plate are kept separate and a radial circumferential gap (clearance) is present between these.

In order to prevent that the packing material laying on the bottom plate can fall in the clearance between the bottom plate and the burner basket inner side wall, and to avoid slip of process gas and/or ammonia, the burner basket assembly comprises a clearance cover arrangement in the form of an L-shaped clearance cover profile or a wave breaker arrangement of which an L-shaped clearance cover profile is a part of. Typically, the L-shaped clearance cover profile is subdivided in a multitude of L-shaped clearance cover profile segments. Each clearance cover profile segment comprises a vertical clearance cover plate segment, and a horizontal clearance cover profile segment which are mechanically fixed to each other in a L-vertex and form a right angle. Each vertical clearance cover plate segment is positioned as close as possible to the burner basket inner side wall to avoid gas bypass and/or creation of a trough in the bed of packing material which rests on the bottom plate of the burner basket assembly. It is remarked that the vertical clearance cover plate segments are not mechanically fixed to the burner basket inner side wall. In an ideal situation, each vertical clearance cover plate segment is in contact with the burner basket inner side wall. Furthermore, in an ideal situation, each horizontal clearance cover plate segment rests on the bottom plate. The L-shaped clearance cover plate segments are positioned the one next to the other and are more in particular joined to each other by means of stiffeners and intermediate strips. Together, they form a ring-shaped L-shaped clearance cover plate. Each vertical as well as horizontal clearance cover plate segment is typically perforated to allow passage of the process gas through it. Since the burner basket inner side wall is curved and must be as close as possible to the burner basket inner side wall, each vertical clearance cover plate segment has a curvature corresponding the curvature of the burner basket inner side wall.

A wave breaker arrangement can have various forms such as triangular ridges or angled sheets, which help to direct the flow of gases and to reduce the formation of troughs that can damage the catalyst. Also, a wave breaker arrangement typically is subdivided in a plurality of wave breaker segments. Each wave breaker segment comprises a vertical wave breaker back wall segment and a horizontal wave breaker plate segment which are mechanically fixed to each other. In the presence of a wave breaker arrangement, each L-shaped clearance cover profile segment is part of a respective wave breaker segment, i.e. each vertical clearance cover plate segment is part of or corresponds with a respective wave breaker back wall segment, and each horizontal clearance cover plate segment is part or corresponds with a respective wave breaker horizontal plate segment. Each wave breaker segment further comprises an upper plate, which is sloped (or in other words is placed at an angle) with respect to the bottom plate. The upper plate is further held in its sloped position by means of a plurality of stiffeners which are mechanically connected to a respective wave breaker back wall segment. Typically, at each lateral side of a respective wave breaker segment, a vertically oriented joining stiffener is mechanically fixed to the respective wave breaker segment which join two neighbouring wave breaker segments to each other. Furthermore, typically, 1 or 2 intermediate stiffeners are mechanically fixed to the wave breaker segment between the two lateral sides thereof. Each stiffener is mechanically attached to the wave breaker top plate segment, the horizontal wave breaker plate segment and the vertical wave breaker wall segment. Each intermediate carrier plate typically has a central opening in it to allow a good distribution of the produced gases.

Although each vertical clearance cover plate segment of the L-shaped clearance cover profile must be situated as close as possible to the burner basket inner side wall, and preferably be in contact with it, such that the L-shaped clearance cover profile segments would follow the movement and/or the deformation of the burner basket inner side wall due to thermal influences, the contact between the L-shaped clearance cover profile segments and the burner basket inner side wall can be disrupted and one or more L-shaped clearance cover profile segments can move radially so far away from the burner basket inner side wall that a longitudinal gap is created between a vertical clearance cover plate segment of the L-shaped clearance cover profile segment and the burner basket inner side wall. This longitudinal gap has the risk that bypass of process gas or ammonia slip occurs, and/or that packing material falls in this longitudinal gap. In order to reduce these risks as much as possible, the burner basket assembly comprises a locking system to lock the L-shaped clearance cover profile to the burner basket assembly. The locking system according to the present disclosure comprises a key-lock system. Each L-shaped clearance cover segment and wave breaker segment more in particular is provided with such a key-lock system to enable these to be positioned and held as close as possible to the burner basket inner side wall. Each key-lock system comprises a lock which is mechanically fixed to the burner basket inner side wall and which extends through a window opening arranged in each vertical clearance cover plate segment. The lock is provided with at least one lock opening which extends (vertically) throughout the height of the lock and which is configured to insert a key in it. Thereto, the key at least comprises a pin. The pin more in particular has a constant width over its pin length and has more in particular a rectangular or square diameter. In order to be able to dismantle the burner basket assembly for instance to clean the ammonia oxidation burner assembly, which is typically done every year, the at least one lock opening and the pin are configured to remove the pin again out of the lock opening again.

Since the size and/or the shape of the burner basket inner side wall and/or one or more of the L-shaped clearance cover segments can change due to the thermal influences as described above, a plurality of lock openings are provided in the lock which each extend throughout the height of the lock and which are staggered in view of the burner basket inner side wall, meaning that there is a first lock opening which is arranged closest to the burner basket inner side wall and at least a second lock opening which is arranged further away from the burner basket inner side wall considered in radial direction in view of the centre of the burner basket inner side wall. It is furthermore possible to provide more than two lock openings which are placed at farther distances in view of the burner basket inner side wall considered in radial direction in view of the centre of the burner basket inner side wall. Each lock opening is configured to insert the pin into it and to remove an inserted pin again out of it. The ideal situation is that the pin is placed in the first lock opening. This is possible at installation of the burner basket assembly when the burner basket assembly has not been in operation. However, in case deformation and/or expansion of the burner basket inner side wall and/or the vertical clearance cover plate segments or the wave breaker back wall segments, whichever are applicable, has taken place, there exists the possibility that the pin cannot be placed anymore in the first opening and need to be manually removed out of it and subsequently be placed in a second or further lock opening.

The key more in particular has a T-shape, wherein the pin is arranged in a vertical direction and wherein a horizontal key part is mechanically fixed to the vertically extending pin. This allows easy insertion and removal of the pin out of a respective lock opening. The pin can have such a pin length that the lower part thereof rests on the horizontal clearance cover plate of the L-shaped clearance cover profile, but this is not a prerequisite.

In order to limit the width of the lock to reduce material and furthermore to reduce the risk that the horizontal key part of a T-shaped key would come into contact with the curved sealing plate, the lock openings are configured in a staggered and overlapping configuration.

In order to reduce the risk of process gas bypass or ammonia slip in a longitudinal gap which is created between the burner basket inner side wall and one or more vertical clearance cover plate segments or vertical wave breaker back wall segments , whichever is applicable, due to the thermal influences of the ammonia oxidation process in the burner basket arrangement, an additional locking arrangement can be provided to "lock" the clearance cover profile segment(s) / the wave breaker segment(s) to the burner basket inner side wall without mechanically fixation thereof, this in the form of an L-shaped locking profile. This L-shaped locking profile is mechanically connected in an upside down way to a support ring which at its turn is mechanically connected to the burner basket inner side wall. The support ring typically has a circular shape, is made out of one piece and has a square or rectangular diameter. The L-shaped locking profile typically is subdivided in different L-shaped locking profile segments that are mechanically fixed to the bottom of the support ring without any spacing between two neighbouring L-shaped locking profile segments. Each L-shaped locking profile segment comprises a vertical locking plate segment and a horizontal locking plate segment which are mechanically fixed to each other in an L-vertex and form a right angle. Each vertical locking plate segment has as curved shape. All together, they form a circular shaped vertical locking plate. The curvature of each vertical locking plate segment is corresponding to the curvature of the vertical clearance cover plate segments and thus the burner basket inner side wall.

Depending on the orientation of the horizontal locking plate segments in view of the vertical locking plate segments, the different L-shaped locking profile segments, the burner basket inner side wall and optionally the remaining part of the bottom of the support ring which extends between the horizontal locking plate segments which are mechanically connected to it and the burner basket inner side wall, limit a ring-shaped cavity which more in particular has a circular shape with a rectangular cross-section. This ring-shaped cavity is configured to allow a top part of each of the vertical clearance cover plates to extend in it and to move in it in an up and down direction since the L-shaped clearance cover profiles / one or more of the L-shaped clearance cover profile segments follow the movement of a moving bottom plate of the burner basket assembly due to thermal influences which occur during operation of the burner basket assembly. Directly after installation, when the L-shaped clearance cover plate segments and the burner basket inner side wall have perfect sizes and shapes, the horizontal locking plate segments of the upside down mounted L-shaped locking profile segments are mechanically fixed to the bottom of the support ring in a direction towards the burner basket inner side wall in view of the vertical locking plate segments. The ring-shaped cavity is in that case more in particular formed by the L-shaped locking profile segments and the burner basket inner side wall. However, after having been in operation, one or more of the L-shaped clearance cover plate segments and the burner basket inner side wall can have amended sizes and/or shapes due to the thermal influences of the ammonia oxidation process in comparison with newly installed elements, through which it becomes impossible to still mechanically fix the L-shaped locking profile segments in view of the burner basket inner side wall in the configuration as mentioned before. It is then required to mechanically fix the L-shaped locking plate segments to the bottom of the support ring in a direction away from the burner basket inner side wall in view of the vertical locking plate segments to allow the same degree of vertical movement possibility of the top part of the vertical clearance cover plate segments in the ring-shaped cavity. It is remarked that both configurations can be applied in case L-shaped clearance cover profile segments as well as a wave breaker arrangement including such L-shaped clearance cover profile segments are applied in the burner basket assembly.

In a possible embodiment of a burner basket assembly according to the present disclosure, the mechanical locking of the different parts of the burner basket assembly as described above is done by means welding.

An ammonia oxidation reactor according to the present disclosure comprises a burner basket assembly according to the present disclosure as described above.

A nitric acid production plant according to the present disclosure comprises an ammonia oxidation reactor according to the present disclosure as described above.

The present disclosure will now be described in more detail referring to some specific embodiments of burner basket assemblies according to the present invention with reference to the figures. It should be clear that these specific embodiments are not limitative to the scope of the present disclosure.

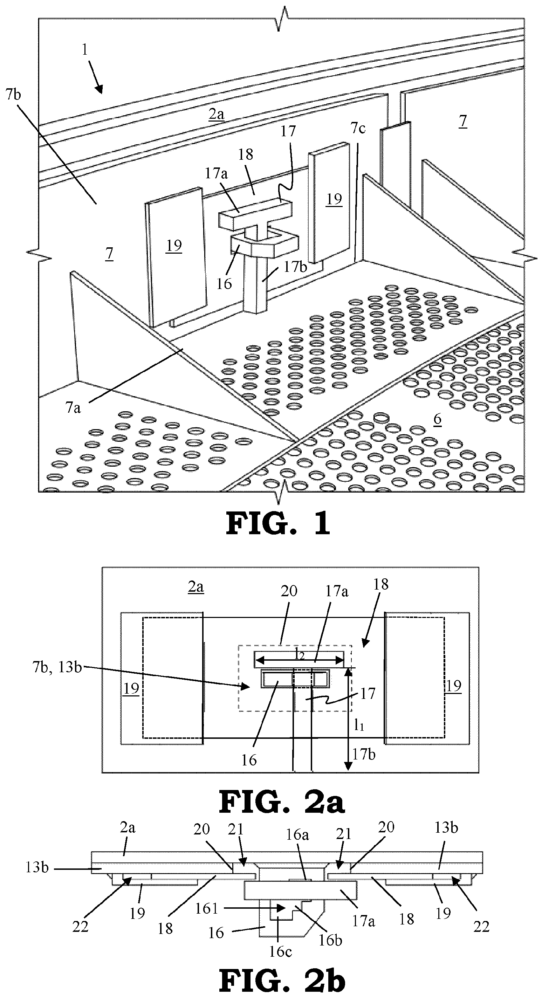

In the first embodiment of the burner basket assembly according to the present disclosure as shown in Figure 1, a burner basket assembly comprising a plurality of neighbouring L-shaped clearance cover profile segments (7) that rest on the perforated bottom plate (6) are shown. A L-shaped clearance cover profile segment (7) comprises a horizontal clearance cover plate segment (7a) and a vertical clearance cover plate segment (7b) which are welded to each other in an L-vertex (7c) and form a right angle. As can be seen in Figure 1, each horizontal clearance cover plate segment is generally perforated, except of a zone in the surrounding of the edge where the horizontal clearance cover plate segment (7a) is welded to the vertical clearance cover plate segment. In an ideal situation, the vertical locking plate segment (7b) is in contact with the burner basket inner side wall (2a). However, during operation of the burner basket assembly, parts of the burner basket arrangement can be displaced and/or deformed and the contact between the burner basket inner side wall (2a) and the L-shaped clearance cover profile segment (7) can be broken. In order to "lock" each L-shaped clearance cover profile segment (7) to the burner basket inner side wall (2a), without mechanically fixation (welding), each vertical clearance cover plate segments (7a) of a respective L-shaped clearance cover profile segment (7) comprises a key-lock system. Such a key-lock system first of all comprises a lock (16) which is mechanically fixed (welded) to the burner basket inner side wall (2a). The lock (16) extends in a horizontal direction. The lock (16) passes through a window opening (20) which is provided in the wave breaker back wall segment (13b). As can be seen in Figure 4b, the window opening (20) is configured such that there is a clearance (21) between the lock (17) and the wave breaker back wall segment (13b). As can be seen in Figure 2a, in order to seal the window opening (20) to avoid process gas to bypass the catalyst, a sealing plate (18) is provided which has a pass-through opening (18a) through which the lock (16) also extends. The sealing plate (18) is kept in its place with two retaining plates (19) whereof each front end (19a) overlaps with a respective lateral end (18b) of the sealing plate (18). In order to cope with the deformation and/or the thermal influences of the ammonia oxidation process, a clearance (22) is provided between each lateral side (18c) of the sealing plate (18) and the lateral side (19b) of each of the retaining plates (19).

The lock (16) comprises three vertically extending lock openings (16a, 16b, 16c) which extend through the whole height (h) of the lock (16). As can be seen in Figure 4b, in this embodiment, three staggered lock openings (16a, 16b, 16c) with a square diameter (d) are provided, wherein each lock opening (16a, 16b, 16c) is located at a different radial distance (Ri, R₂, R₃) in view of the burner basket inner side wall (2a), the smallest radial distance (Ri) being the preferred one since then a respective vertical clearance cover plate segment (7a) is held ("locked") closest to the burner basket inner side wall (2a), without being mechanically fixed to it. In case of need, for instance after the vertical clearance cover plate segment (7b) or the wave breaker back wall segment (13b) and/or the burner basket inner side wall are deformed and/or expanded, the key (17) can be removed out of the key opening (16a, 16b, 16c) in which it is inserted by taking hold the horizontal key part (17a) by the hand and pulling it out of the respective key opening (16a, 16b, 16c) in which the key (17) at that moment was located. These three lock openings (16a, 16b, 16c) overlap each other, this to reduce the total width (w) of the lock (16).. It is remarked that in practice, the burner basket inner side wall (2a), the vertical clearance cover plate segment (7b) and the wave breaker back wall segment (13b) have a curved shape, but in Figure 4b, they are drawn in a straight way.

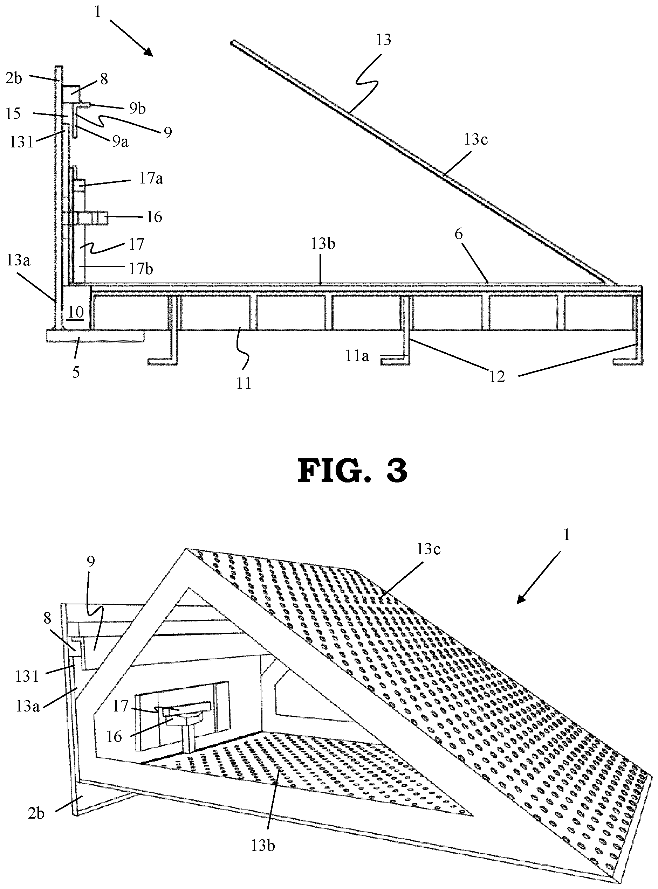

The burner basket assembly (1) further comprises a T-shaped key (17) which a horizontal key part (17a) and a pin (= vertical key part) (17b) which are mechanically fixed (welded) to each other at the middle of the horizontal key part (17a). All lock openings (16a, 16b, 16c) are configured to insert the T-shaped key (17) in it and to remove it again when necessary. As can be seen in Figure 3a, the pin (17b) can have a length (li) such that it rests on the horizontal clearance cover plate segment (7b, 13b). This is however not mandatory. Since the key (17) has a T-shape with a horizontal key part (17a), the key (17) can rest on top of the lock (16) and not be in contact with the horizontal clearance cover plate segment (7b, 13b). The length (I₂) of the horizontal key part (17a) is larger than the total diameter (D) of the lock openings (16a, 16b, 16c) such that the key (17) would stay at its place and would not fall through the lock openings (16a, 16b, 16c).

In Figures 3 and 4, only the burner basket inner side wall (2a) of the second embodiment of a burner basket arrangement according to the present disclosure is shown. The burner basket inner side wall (2a) is at the bottom thereof provided with a supporting shell (5), which is welded to the bottom of the burner basket inner side wall (2a). As can be seen in Figure 3, the supporting shell (5) supports a perforated bottom plate (6) which at the underside thereof is provided with a supporting structure (11), more in particular in the shape of a honeycomb. On the perforated bottom plate (6), an L-shaped clearance cover profile segment (7) rests which covers part of the circular circumferential clearance (or gap) (10) which extends between the burner basket inner side wall (2a) and the perforated bottom plate (6). This L-shaped clearance cover profile segment (7) comprises a vertical clearance cover plate segment (7a) which, when newly installed, is in contact with the burner basket inner side wall (2a), but is not mechanically fixed to it, and furthermore comprises a horizontal clearance cover plate segment (7b) which rests on the perforated bottom plate (6).

As can be seen in Figures 3 and 4, a circular support ring (8) with a square cross-section is welded to the burner basket inner side wall (2a). The support ring (8) is made out of one piece. A plurality of upside down L-shaped locking profile segments (9) are welded the one next to the other without spacing between them to the bottom of the support ring (8). Each upside down L-shaped locking profile segment (9) comprises a horizontal locking plate segment (9a) and a vertical locking plate segment (9b) which are welded to each other at a L-vertex (9c) and form a right angle. The totality of vertical locking plate segments (9b) and horizontal locking plate segments (9a), and the burner basket inner side wall (2a), limit a ring-shaped cavity (15) with a rectangular cross-section. The L-shaped locking profile (9) is welded to the support ring (8) which at its turn is welded to the burner basket inner side wall (2a). The support ring (8) and the L-shaped locking profile (9) have a size such that the top part (71) of the different vertical clearance cover plate segments (7a) of the L-shaped clearance cover profile segments (7) after installation are located in there in such a way that the top part (71) of the different vertical clearance cover plate segments (7a) can move up and down in the cavity (15) such that it can follow an up and down movement of the perforated bottom plate (6).

As can be seen in Figure 3, when newly installed, the vertical clearance cover plate segment (7) is as close as possible to, and more in particular in contact with the burner basket inner side wall (2a), but is not mechanically fixed to it. For that reason, it is possible to orient the horizontal locking plate segment (9a), in view of the vertical locking plate segment (9b), away from the burner basket inner side wall (2a). The different neighbouring vertical locking plate segment (9b), horizontal locking plate segments (9a) and the burner basket inner side wall (2a) limit in this configuration a cavity (15) with a limited space, which is acceptable since, after having been newly installed, all metal parts of the burner basket assembly still have a perfect size and shape, and are still in the appropriate place. This is the preferred situation. In Figure 4, however, the L-shaped locking profile segment (9) is mirrored in view of the L-locking profile segment (9) as shown in Figure 3, or in other words, the horizontal locking plate segment (9a) is, in view of the vertical locking plate segments (9b), oriented towards the burner basket inner side wall (2a). The cavity (15) which is in that configuration limited by the different neighbouring vertical locking plate segments (9b), the horizontal locking plate segments (9a), the part of the bottom part of the support ring (8) that extends between the horizontal locking plate segments (9a) and the burner basket inner side wall (2a), has a larger width than the cavity (15) as shown in Figure 3. The reason therefore is that, in case during operation deformation and/or expansion due to the thermal influences has been taken place of at least one or more of the vertical clearance cover plate segments (7a) and/or the burner basket inner side wall, the contact between one or more of the vertical clearance cover plate segments (7b) can be interrupted, requiring more space to still allow sufficient movement of the top part (71) of the different vertical clearance cover plate segments (7a) in the cavity (15).

As can be seen in Figures 3 and 4, the vertical wave breaker back wall segment (13a) includes, and more in particular corresponds with the vertical clearance cover plate segment of the L-shaped clearance cover profile segment (7) as shown in Figure 1. Furthermore, the horizontal wave breaker plate segment (13b) includes the horizontal clearance cover plate segment (13a) as shown in Figure 1.

As can be seen in Figure 3, when the burner basket assembly (1) is newly installed, the vertical wave breaker back wall segment (13a) is as close as possible to the burner basket inner side wall (2a), and more is particular in contact with it, but is not mechanically fixed to it. The horizontal wave breaker plate segment (13b) rests on the perforated bottom plate (6). A circular support ring (8) with a square cross-section and made out of one piece is welded to the burner basket inner side wall (2a). A plurality of upside down L-shaped locking profile segments (9) are welded the one next to the other without spacing between them to the bottom of the support ring (8). Each upside down L-shaped locking profile segment (9) comprises a horizontal locking plate segment (9a) and a vertical locking plate segment (9b) which are welded to each other at a L-vertex and form a right angle. The totality of vertical locking plate segments (9b) and horizontal locking plate segments (9a), and the burner basket inner side wall (2a), limit a ring-shaped cavity (15) with a rectangular cross-section. The L-shaped locking profile (9) is welded to the support ring (8) which at its turn is welded to the burner basket inner side wall (2a). The L-shaped locking profile (9) and the support ring (8) have a size such that the top part (131) of the different vertical wave breaker back wall segments (7a) of the wave breaker segment (7) after installation are located in the ring-shaped cavity (15). The ring-shaped cavity (15) furthermore has a size such that the top part (131) of one or more of the vertical wave breaker back wall segments (7a) can move up and down in the cavity (15) such that an up and down movement of the perforated bottom plate (6) can be followed. The horizontal locking plate segment (9a) is, in view of the vertical locking plate segment (9b), oriented away from the burner basket inner side wall (2a).

In Figure 4, however, the L-shaped locking profile segment (9) is mirrored in view of the L-locking profile segments (9) as shown in Figure 3. In other words, the horizontal locking plate segments (9a) are, in view of the vertical locking plate segments (9b), oriented towards the burner basket inner side wall (2a). The cavity (15) which is in that situation limited by the different vertical locking plate segments (9b), the horizontal locking plate segments (9a), the part of the bottom part of the support ring (8) that extends between the horizontal locking plate segments (9a) and the burner basket inner side wall (2a), has a larger width than the cavity (15) as shown in Figure 3. This is necessary since due to thermal influences, the vertical locking plate segment (9a) can be deformed and/or expanded, and the contact between one or more of the vertical wave breaker segments (13a) can be interrupted, resulting in a more spacious cavity (15) being required to still allow the top part (131) of the respective deformed and/or expanded vertical wave breaker back walls (13a) to follow an up and down movement of the perforated bottom plate (not shown in Figure 4).

It is remarked that also the first embodiment of the burner basket arrangement according to the present disclosure as shown in Figure 1 comprising L-shaped clearance cover profile segments (and no wave breaker segments as is the case in the second embodiment as shown in Figures 3 and 4) can also be arranged with a support ring and a plurality of L-shaped locking profile segments as shown in Figures 3 and 4.

## Claims

1. A burner basket assembly of an ammonia oxidation reactor, wherein the burner basket assembly comprises
- a burner basket inner side wall,
- a gas-permeable bottom plate,
wherein between the burner basket inner side wall and the bottom plate a circumferential radial clearance is present,
- an L-shaped clearance cover profile which comprises a horizontal and a vertical clearance cover plate, wherein the horizontal and the vertical clearance cover plate are mechanically fixed to each other, wherein the vertical clearance cover plate comprises a window opening, and wherein the L-shaped cover profile during operation is displaceable in a vertical direction in view of the burner basket inner side wall, and
- at least one key-lock system which comprises
• a lock which is connected to the burner basket inner side wall, which extends through the window opening in the vertical clearance cover plate, and which comprises at least one lock opening; and
• a key which has at least a vertical pin with a certain pin length, wherein the lock opening is configured to allow insertion of the pin in the lock opening, and at the same time is configured to limit movement of the pin in view of the lock opening to such an extent that radial movement of the vertical clearance plate in view of the burner basket inner side wall is restricted.

2. A burner basket assembly according to claim 1, wherein the pin has a rectangular or square cross-section over its entire pin length.

3. A burner basket assembly according to claim 1 or 2, wherein the lock comprises a plurality of staggered lock openings in view of the burner basket inner side wall, more in particular a plurality of neighbouring staggered overlapping lock openings, that each are configured to remove the pin which was inserted in it out of it.

4. A burner basket assembly according to any one of claims 1 to 3, wherein the lock openings have a certain width considered in view of the burner basket wall, and wherein the key is in the shape of a T comprising the pin and a horizontal key part which is fixed to the pin, wherein the horizontal key part has a width which is larger than the width of the one lock opening or the total width of the plurality of lock openings, wherein more in particular the pin rests on the horizontal clearance cover plate.

5. A burner basket assembly according to any one of claims 1 to 4, wherein the vertical clearance cover plate comprises a window opening, and wherein the burner basket assembly comprises at least one key-lock system of which the lock which is connected to the burner basket inner side wall extends through the window opening in the vertical clearance cover plate.

6. A burner basket assembly according to any one of claims 1 to 4, wherein the vertical cover clearance plate comprises at least two cover plates which are mechanically fixed to the vertical cover clearance plate and which are configured to hold at least one sealing plate in a fixed position in view of the vertical clearance cover plate, wherein the at least one sealing plate is provided with a pass-through opening which is arranged to let the lock pass through it and in a fixed position extend through it, wherein more in particular two cover plates are provided which are located at opposite sides of one sealing plate to hold the sealing plate in the fixed position, wherein more in particular between the sealing plate and each of the retaining plates, a clearance is provided.

7. A burner basket assembly according to any one of claims 1 to 6, wherein each vertical clearance cover plate segment comprises a window opening and is arranged with a key-lock system, wherein each key-lock system comprises
- a lock which is connected to the burner basket inner side wall, which extends through the window opening in the vertical clearance cover plate segment, and comprises at least one lock opening; and
- a key which has at least a vertical pin with a certain pin length, wherein the lock opening is configured to allow insertion of the pin in the lock opening, and at the same time to limit movement of the pin in view of the lock opening to such an extent that radial movement of the vertical clearance plate segment in view of the burner basket inner side wall is limited.

8. A burner basket assembly according to any one of the preceding claims, wherein the vertical clearance cover plate has a certain length, and wherein the burner basket assembly further comprises
- a support ring which is mechanically fixed to the burner basket inner side wall,
- an upside down positioned L-shaped locking profile, comprising a horizontal locking plate and a vertical locking plate which are mechanically fixed to each other,
wherein the horizontal locking plate is mechanically fixed to the support ring, wherein the L-shaped locking profile, the burner basket inner side wall, and optionally the support ring limit a ring-shaped cavity into which a top part of the vertical clearance cover plate is located, and
wherein the support ring is positioned at a distance in view of the vertical clearance cover plate which is such that the vertical displacement of the vertical clearance cover plate in view of the burner basket inner side wall is limited by the support ring, and wherein at all times during the operation of the ammonia oxidation reactor, collision between the top part of the vertical clearance cover plate and the L-shaped locking profile and/or optionally the support ring is avoided.

9. A burner basket assembly according to claim 8, wherein the L-shaped clearance cover profile is part of a wave breaker arrangement, wherein the wave breaker arrangement comprises a vertical back wall and a horizontal bottom, and wherein the vertical clearance cover plate is at least part of the vertical back wall and the horizontal clearance cover plate is at least part of the horizontal bottom of the wave break arrangement.

10. A burner basket assembly according to claim 8 or 9, wherein the L-shaped clearance cover profile comprises a multitude of L-shaped clearance cover profile segments, each comprising a vertical clearance cover plate segment and a horizontal clearance cover plate segment, wherein each vertical clearance cover plate segment is mechanically fixed to a respective horizontal clearance cover plate segment, and/or
- the support ring comprises a multitude of support ring segments which each are mechanically fixed to the burner basket inner side wall, wherein each of the support ring segments comprise a support ring segment bottom, and/or
- the L-shaped locking profile comprises a multitude of L-shaped locking profile segments, each comprising a horizontal L-shaped locking plate segment and a vertical L-shaped locking plate segment which are mechanically fixed to each other,
wherein each L-shaped locking profile segment, the burner basket inner side wall, and optionally a respective support ring segment and limit a ring-shaped gap segment into which a top part of the respective vertical clearance cover plate segment is located, and
wherein each support ring segment is placed at a distance in view of the respective vertical clearance cover plate segment which is such that the vertical displacement of the vertical clearance cover plate segment in view of the burner basket inner side wall is limited by the respective support ring segment, and at all times during the operation of the ammonia oxidation reactor, collision between the top part of the vertical clearance cover plate segment and the L-shaped locking profile segment and/or the support ring segment is avoided.

11. A burner basket assembly according to any one of claims 8 to 10, wherein the wave breaker arrangement comprises a multitude of wave breaker segments, wherein each wave breaker segment comprises a vertical back wall segment and a horizontal wave breaker plate segment, wherein each vertical clearance cover segment is at least part of a respective vertical back wall segment and each horizontal clearance cover plate segment is at least part of a respective horizontal wave breaker plate segment of the respective wave breaker segment.

12. A burner basket assembly according to any one of claims 8 to 11, wherein the support ring and each of the support ring segments have a constant cross-section over their circumference, the support ring and each of the support ring segments more in particular having a square or rectangular cross-section.

13. A burner basket assembly according to any one of the preceding claims, wherein the mechanical fixing is done by welding.

14. An ammonia oxidation reactor comprising a burner basket assembly according to any one of the preceding claims.

15. A nitric acid production plant comprising an ammonia oxidation reactor according to claim.
